# EUROPEAN PATENT APPLICATION

(11) **EP 2 136 584 A2**
(43) Date of publication of application: **23.12.2009**
(21) Application number: 09162615.0
(22) Date of filing: 12.06.2009
(51) Int. Cl.: H04W 28/02

(54) **Wireless base station, mobile terminal, communications controlling method, and wireless communications system**

(30) Priority: 16.06.2008 JP 2008156941
(71) Applicant: Fujitsu Ltd., Kawasaki-shi, Kanagawa 211-8588 (JP)
(72) Inventor: Takase, Ryo, Fukuoka-shi Fukuoka 814-8588 (JP); Kawabata, Kazuo, Kawasaki-shi Kanagawa 211-8588 (JP)
(74) Representative: Fenlon, Christine Lesley

(57) **Abstract**

The ratio of the number of connection sequences started upon reception of a connection request signal transmitted from the mobile terminals (200, 200-1, and 200-2) to the number of completed connection sequences is monitored, and on the basis of the monitoring result, the presence or the absence of a congestion state in the communications network is evaluated.

## Description

### FIELD

The embodiments discussed herein are related to a wireless base station, a mobile terminal, a communications controlling method, and a wireless communications system.

### BACKGROUND

Random Access Channel (RACH) is provided as one of the channels which realize communications between user equipment [UE (for example, a mobile terminal)] and a wireless base station (for example, e-Node B (eNB)).
This RACH is a wireless channel shared with other UE belonging to the same cell (or sector) of an eNB, and is used, for example, when UE starts communications with the eNB.
The UE, for example, selects one of the 64 kinds of RACH preamble codes (RACH number), and transmits an RACH preamble notification (Message 1) including the RACH number toward the eNB. Then, upon reception of the Message 1, a series of connection sequence is started.
As already existing techniques relating to the RACH, the following patent documents 1 through 4, for example, describe such techniques:
[Patent Document 1] Japanese Laid-open Patent Publication No. 8-336177;
[Patent Document 2] Japanese Laid-open Patent Publication No. 2002-217956;
[Patent Document 3] Japanese Laid-open Patent Publication No. 10-108260;
[Patent Document 4] Japanese Laid-open Patent Publication No. 2005-328317.

According to the above described communications controlling methods, in a case, for example, where more than one piece of UE selects the same RACH number and transmits the Messages 1 to the eNB at the same timing, these Messages 1 can collide with one another.
Since it is impossible for the eNB to normally receive the colliding Messages 1 so that the multiple UE which have transmitted the Message 1 is incapable of normally completing a connection sequence with the eNB, it can occur that the multiple pieces of UE repeat retransmission of the Message 1.

Under such a situation, the probability of collision of the Messages 1 becomes higher. In addition, a congestion state can be caused in a communications network.

### SUMMARY

It is desirable to make it possible to early detect an occurrence of a congestion state in a communications network.
It is also desirable to suppress the occurring congestion state.

(1) According to an aspect of the embodiment, an apparatus includes a wireless base station which is capable of communicating with a plurality of mobile terminals, the wireless base station including: a monitor that monitors a ratio of the number of connection sequences which are started upon reception of connection request signals transmitted from the mobile terminals to the number of connection sequences which are completed; and an evaluator that evaluates the presence or the absence of a congestion state based on the monitoring result obtained by the monitor.

(2) According to an aspect of the embodiment, an apparatus includes a mobile terminal which is capable of communicating with a wireless base station, the mobile terminal including: a transmitter that transmits a connection request signal toward the wireless base station; and a controller that restricts new transmission processing performed by the transmitter according to information indicating restriction of the transmission, which information is received upon decision of an occurrence of a congestion condition by monitoring a ratio of the number of connection sequences which are started upon reception of a connection request signal transmitted from the mobile terminals to the number of connection sequences which are completed.

(3) According to an aspect of the embodiment, a method includes a communication controlling method for use in a wireless communications system, including: a plurality of mobile terminals; a wireless base station which is capable of communicating with the plurality of mobile terminals, the communications controlling method including: on the wireless base station, monitoring a ratio of the number of connection sequences which are started upon reception of a connection request signal transmitted from the mobile terminals to the number of connection sequences which are completed; and evaluating whether a congestion condition is present or absent, based on the monitoring result.

(4) According to an aspect of the embodiment, a system includes a wireless communications system, including: a plurality of mobile terminals; a wireless base station which is capable of communicating with the plurality of mobile terminals; a monitor that monitors a ratio of the number of connection sequences which are started upon reception of a connection request signal from the mobile terminals to the number of connection sequences which are completed; an evaluator that evaluates whether a congestion condition is present or absent, based on the monitoring result obtained by the monitor; a mobile terminal controller that restricts transmission of a new connection request signals from the mobile terminals when the evaluator decides that the congestion condition occurs; a transmitter that transmits a connection request signal toward the wireless base station; and a controller that restricts new transmission processing performed by the transmitter according to information indicating the restriction of the transmission, which information is received from the wireless base station.
The desirable features and advantages of the embodiment will be realized and attained by means of the elements and combinations particularly pointed out in the claims.
It is to be understood that both the foregoing general description and the following detailed description are exemplary and explanatory and are not restrictive of the invention, as claimed.

### BRIEF DESCRIPTION OF THE DRAWINGS

Preferred features of the present invention will now be described, purely by way of example, with reference to the accompanying drawings, in which:-

FIG. 1 is a diagram illustrating an example of a construction of a wireless communications system according to one embodiment;
FIG. 2 is a diagram illustrating an example of a connection sequence with RACH;
FIG. 3 is a diagram illustrating an example of a connection sequence with RACH;
FIG. 4 is a diagram illustrating an example of a connection sequence with RACH;
FIG. 5 is a block diagram illustrating an example of a construction of the wireless base station depicted in FIG. 1;
FIG. 6 is a block diagram illustrating an example of a construction of the mobile terminals depicted in FIG. 1;
FIG. 7 is a flowchart indicating an example of an operation of the wireless base station depicted in FIG. 5;
FIG. 8 is a flowchart indicating an example of an operation of the wireless base station depicted in FIG. 5;
FIG. 9 is a flowchart indicating an example of an operation of the mobile terminals depicted in FIG. 6; and
FIG. 10 is a diagram indicating variations in the number of calls over time in the wireless communications system depicted in FIG. 1.

### DESCRIPTION OF EMBODIMENT

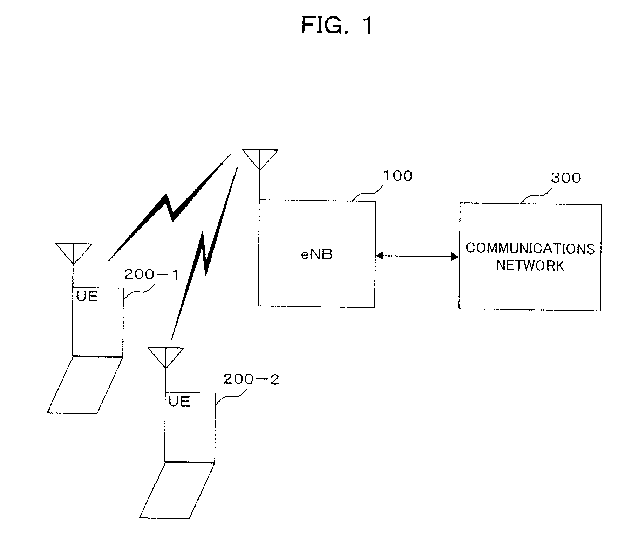

Hereinafter, exemplary embodiments will be described withreferenceto relevant accompanying drawings. The following exemplary embodiment is merely an example and does not intend to exclude various modifications and variations to the proposed method and/or apparatus that are not specifically described herein. Rather, various modifications or variations may be made to the embodiment without departing from the scope and gist of the proposed method and/or apparatus.
[1] One Preferred Embodiment
   FIG. 1 is a block diagram illustrating an example of a construction of a wireless communications system according to one preferred embodiment.
   The wireless communications system exemplified in FIG. 1 includes: an eNB 100 connected with a communications network (core network) 300; more than one piece of UE 200-1 and 200-2 which is capable of wirelessly communicating with the eNB 100. In this instance, in the following description, when no distinction is made between the UE 200-1 and the UE 200-2, it will be simply called the "UE 200". Further, the numbers of UEs 200, eNBs 100, and communications networks 300, respectively, are not limited to the numbers exemplified in FIG. 1.

In the following description, the communications direction from the communications network 300 to the eNB 100 and the communications direction from the eNB 100 to the UE 200 are called "downlink"; the communications direction from the UE 200 to the eNB 100 and the communications direction from the eNB 100 to the communications network 300 are called "uplink".
The eNB 100 is, for example, capable of relaying data and calls between the communications network 300 and the UE 200 and also controlling communications; the UE 200 is capable of transceiving data and calls therebetween.

Here, communications between the UE 200 and eNB 100 is started, for example, at an opportunity of normal completion of a series of connection sequence (call connection processing) using a RACH.

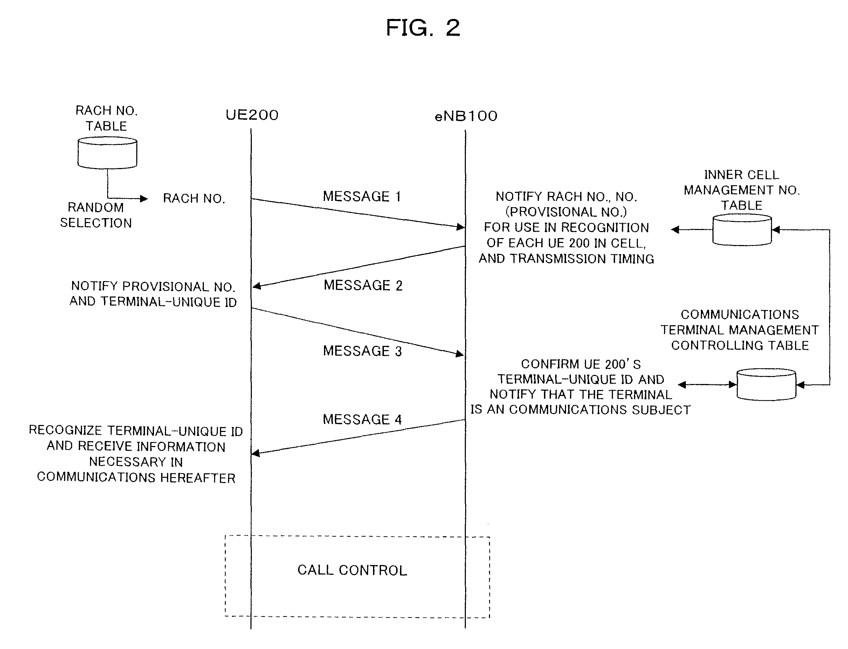

FIG. 2 illustrates an example of a case where a connection sequence with RACH is normally completed.
First of all, the UE 200 selects the RACH number at random from the RACH number table which the local station 200 has, and then transmits an RACH preamble notification (Message 1) (hereinafter, will be called "M1 signal") including this RACH number toward the eNB 100.

Next, the eNB 100 which has received an M1 signal from the UE 200 selects a temporary number (Cell-Radio Network Temporary Identity: C-RNTI) for recognizing the UE 200 from the intra-cell management number table which the local station 100 has. Then, the local station 100 transmits back the RACH preamble response (Message 2) (hereinafter, will be described as the "M2 signal"), including the RACH number, the temporary number, and transmission timing information, toward the UE 200. Further, the eNB 100 is also capable of assigning uplink communications resources for used in communications thereafter to the UE 200.

Next, the UE 200 transmits a terminal-unique ID notification (Message 3) (hereinafter, will be described as the "M3 signal") to the eNB 100 at transmission timing calculated from the M2 signal using communications recourses given from the eNB 100. This M3 signal includes, for example: the temporary number assigned to the eNB 100 and the identification data unique to the UE 200 (terminal-unique ID).
The eNB 100 which has received the M3 signal confirms (evaluates) whether or not the UE 200 that has transmitted the M3 signal is a communications subject based on the temporary number, the terminal-unique ID, and a communications terminal management control table. For example, the eNB 100 evaluates whether or not the terminal-unique ID received from the UE 200 matches the terminal-unique ID of a communications subject managed on the host communications network end, thereby being capable of evaluating whether or not the terminal-unique ID is valid.

Then, when confirming that the UE 200 is a communications subject, the eNB 100 transmits a communications reception notification (Message 4) (hereinafter, will be described as the "M4 signal"), including information for use in call control or the like, to the UE 200.
The UE 200 which has received the M4 signal confirms that the local station 200 is a communications subject, and obtains information relating to call controlling, and then starts communications with the eNB 100.

With the above described operation, a series of connection sequence with RACH is normally completed.
When the above connection sequence is normally completed, the UE 200 performs predetermined control with respect to calls with the eNB 100 by use of information relating to call control.
Here, within the same cell (or sector) of the eNB 100, when more than one piece of UE 200 starts the above mentioned connection sequence, it can occur that the M1 signal is transmitted with the same RACH number and at the same timing.

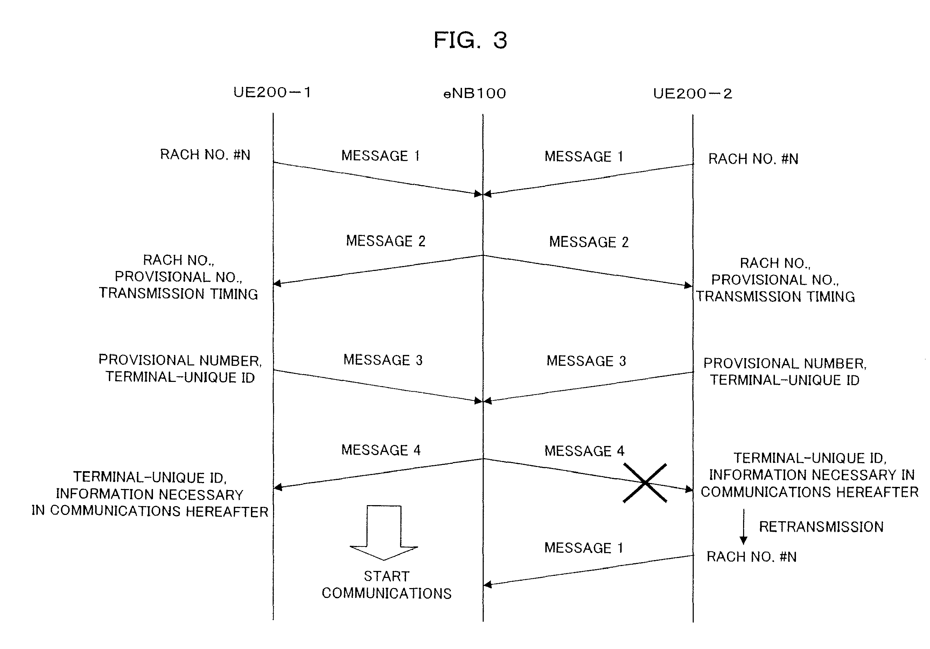

FIG. 3 illustrates an example of a connection sequence with RACH in such a case.
As described above, for example, it is assumed that more than one piece of UE 200-1 and 200-2 selects the same RACH number (#N) (N is a natural number) and that they transmits the M1 signal toward the eNB 100 at the same timing.
At the time of reception of the M1 signal, it is impossible for the eNB 100 to distinguish between the UE 200-1 and the UE 200-2. Thus, the eNB 100 transmits the same M2 signals toward both of the UE 200-1 and 200-2. These same M2 signals include, for example: the same RACH number; the temporary number, and the transmission timing information.

On the other hand, each of the UE 200-1 and 200-2, which has received the same M2 signal, separately transmits the temporary number and the M3 signal containing the terminal-unique ID of the local station toward the eNB 100.
The eNB 100 which has received the M3 signals from the UE 200-1 and the UE 200-2 confirms (evaluates) whether or not each of the UE 200-1 and 200-2 is valid as a communications subject.

Here, for example, when it is decided that the UE 200-1 is valid as a communications subject and the UE 200-2 is not valid as a communications subject, the eNB 100 transmits the M4 signal, which indicates that the UE 200-1 is a valid communications subject, toward the UE 200-1 and the UE 200-2, respectively.
At that time, the UE 200-1 confirms that the local UE 200-1 is a valid communications subject based on the above mentioned information contained in the M4 signal received from the eNB 100 and then starts communications (call controlling or the like) with the eNB 100.

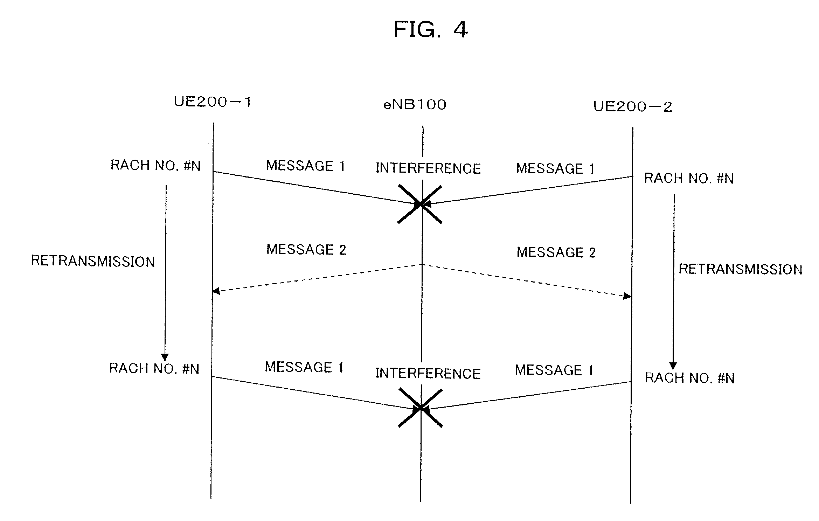

On the other hand, the UE 200-2 confirms that the local station 200-2 is not a valid communications subject, based on information contained in the M4 signal. In this case, the UE 200-2 repeats retransmission of the M1 signal until the above connection sequence is normally completed (until the local station is confirmed to be a valid communications subject).
Further, as exemplified in FIG. 4, when more than one piece of UE 200 transmits more than one M1 signal with the same RACH number (#N) at the same timing, these M1 signals mutually interference with each other, so that none of the M1 signals cannot be normally received by the eNB 100.

In such a case, the UE 200-1 and the UE 200-2 is incapable of receiving the M2 signal within a predetermined time duration, so that the UE 200-1 and the UE 200-2 retransmit the M1 signal. It can occur that this retransmission processing is repeated, for example, until the M2 signal is received from the eNB 100 within the predetermined time duration.
In any of the above described cases, when multiple M1 signals collide with one another, it is impossible to normally complete the above connection sequence with RACH, so that retransmission of the M1 signal is repeated.

As a result, the probability of collision of the M1 signals becomes high, and the probability of an occurrence generation of a congestion state in the communications network also becomes high.
Therefore, according to the present example, the eNB 100 monitors the ratio of the number of connection sequences started upon reception of the M1 signal to the number of connection sequences having been normally completed. On the basis of the monitoring result, the eNB 100 evaluates the presence or the absence of a congestion state in the communications network.

Further, the eNB 100 according to the present example is capable of restricting transmission of the M1 signal by the UE 200 when deciding that the communications network is in a congestion state.
For example, the eNB 100 is also capable of evaluating the presence or the absence of a congestion state in the communications network and also restricting transmission of the UE 200 based on a difference between the number of received M1 signals and the number of transmitted M4 signals. Further, when deciding that the congestion state in the communications network is resolved, the eNB 100 is capable of lifting the transmission restriction.

This makes it possible to detect the congestion in the communications network early since it evaluates the presence or the absence of the congestion state based on a signal transceived in the connection sequence with RACH. Furthermore, it becomes possible to restrict the congestion in the communications network early since it restricts the transmission process of the UE 200 when detecting the congestion.
[2] Specific Examples of Wireless Communications Systems
A description will be made hereinbelow of the details of the above described wireless communications system.

### (2. 1) eNB 100

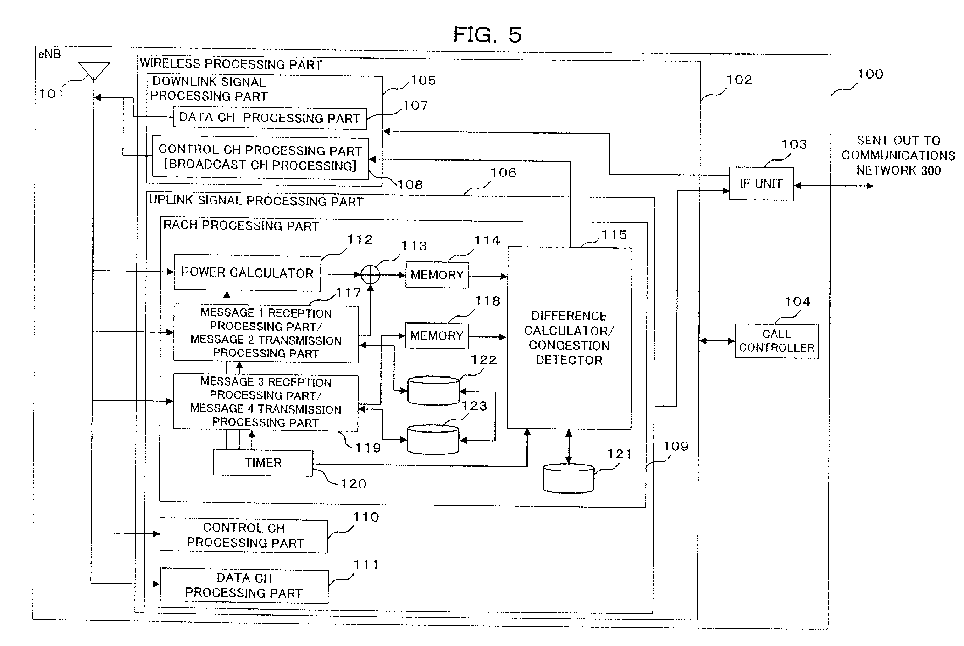

FIG. 5 is a block diagram illustrating a construction example of the eNB 100 according to one preferred embodiment. The eNB 100 exemplified in FIG. 5 includes: a transceiving antenna 101; a wireless processing part 102; an interface (IF) 103; and a call controller 104.
The uplink wireless signal from the UE 200 received by the reception function of the transceiver antenna 101 is subjected to predetermined wireless reception processing performed by the wireless processing part 102, and is then transmitted to the communications network 300 through the IF 103. In contrast, the downlink signal received from the communications network 300 is subjected to a predetermined wireless transmission processing performed by the wireless processing part 102, and is then transmitted toward the UE 200 with the transmission function of the transceiver antenna 101. Further, the call controller 104, for example, manages and controls call connection with the UE 200.

Here, the wireless processing part 102 includes, for example: a downlink signal processing part 105 and an uplink signal processing part 106. The downlink signal processing part 105, which performs predetermined wireless transmission processing on a downlink signal, has, for example, a data CH processing part 107 and a control CH processing part 108.
The data CH processing part 107 performs predetermined wireless transmission processing on downlink data, and the control CH processing part 108 performs predetermined wireless transmission processing on a downlink control CH. Further, the control CH processing part 108 in the present example is capable of broadcasting a predetermined data signal toward the UE 200 by a broadcast CH under control performed by a difference calculator/congestion detector 115, which control will be detailed later.

On the other hand, the uplink signal processing part 106, which performs predetermined wireless reception processing on an uplink signal, includes, for example: a RACH processing part 109; a control CH processing part 110; and a data CH processing part 111. The control CH processing part 110 performs predetermined wireless reception processing on the control CH of an uplink signal; the data CH processing part 111 performs predetermined wireless reception processing on the data CH of an uplink signal. Further, the RACH processing part 109 performs predetermined wireless processing on the RACH of the uplink signal.

The RACH processing part 109 according to the present example includes: a power calculator 112; a Message 1 reception processing part/Message 2 transmission processing part 117; a Message 3 reception processing part/Message 4 transmission processing part 119; and a timer 120. Further, the RACH processing part 109 further includes: an adder 113; memories 114 and 118; an intra-cell management number table 122; a communications terminal management control table 123; a difference calculator/congestion detector 115; and a threshold value table 121. In this instance, in the following description, the Message 1 reception processing part/Message 2 transmission processing part 117 will be simply called the "M1/M2 transceiving processing part 117", and the Message 3 reception processing part/Message 4 transmission processing part 119 is simply called the "M3/M4 transceiving processing part 119".

The M1/M2 transceiving processing part 117 calculates the number of M1 signals received from the UE 200 as value 2, based on the number of M2 signals transmitted to the UE 200.
Here, multiple M1 signals collide with one another, the M1/M2 transceiving processing part 117 is incapable of calculating the number of received M1 signals for the collision thereof. For example, even when the eNB 100 receives two or more M1 signals, the number of transmitted M2 signals (the number of received M1 signals) is "1".

That is, the number of received M1 signals calculated by the M1/M2 transceiving processing part 117 does not include the number of M1 signals colliding with one another. Thus, the number of above described signals colliding with one another is calculated separately by the power calculator 112.
Further, the M1/M2 transceiving processing part 117 according to the present example is also capable of performing normal processing relating to the connection sequence with RACH. For example, the M1/M2 transceiving processing part 117 extracts the RACH number contained in the M1 signal and then transmits the M2 signal containing the thus extracted RACH number and the M2 signal containing the temporary number and the transmission timing information relating to the M3 signal, which are selected from the intra-cell management table 122, toward the UE 200.

The intra-cell management number table 122 stores therein temporary numbers (C-RNTI) identifying each UE 200 in a cell. Further, the temporary number selected by the M1/M2 transceiving processing part 117, for example, can be notified to the communications terminal management control table 123 and stored therein.
The power calculator 112 calculates the number of M1 signals colliding with one another, based on the reception power value of the transceiver antenna 101.

The power calculator 112 according to the present example is capable of detecting that the n-number of M1 signals have collided with one another in a case, for example, where the reception power value at the transceiver antenna 101 is approximately *n* (*n* is a natural number) times as large as the already known reception power value in a case where no collision is present.
Further, according to the present example, when detecting that the n-number of M1 signals have collided with one another, the power calculator 112 calculates and outputs (n - 1) as a correction value (Value 1) for the collision thereamong.

The adder 113 adds the Value 2 calculated by the M1/M2 transceiving processing part 117 and the Value 1 calculated by the power calculator 112 together, and then outputs the thus obtained result to the memory 114.
The memory 114, which is a storage device dedicated to the eNB 100 or a shared one, holds therein the thus obtained addition result (the number of received M1 signals in consideration of the number of colliding ones).
The M3/M4 transceiving processing part 119 calculates the number of transmitted M4 signals (connection permission signal) as Value 3.

Further, similar to the M1/M2 transceiving processing part 117, the M3/M4 transceiving processing part 119 according to the present example is also capable of performing normal processing relating to the connection sequence with RACH. For example, after evaluation as to whether or not the UE 200 is a subject communications terminal by comparing the temporary number and the terminal-unique ID contained in the M3 signal and the contents in the communications terminal management control table 123, when a confirmation is made as to if the UE 200 is a subject communications terminal, an M4 signal containing information indicating the thus obtained confirmation result is transmitted to the UE 200.

The communications terminal management control table 123 stores therein the temporary number notified from the intra-cell management number table 122 and the terminal-unique ID from the UE 200 in association with each other.
The memory 118, which is a storage device dedicated to the eNBs 100 or a shared one, holds therein the Value 3 (the number of transmitted M4 signals) calculated by the M3/M4 transceiving processing part 119.
Here, the difference calculator/congestion detector 115 calculates a difference between the number of received M1 signals (Value 2 + Value 1) held in the memory 114 and the number of transmitted M4 signals (Value 3) held in the memory 118.

The difference calculator/congestion detector 115 evaluates whether or not the communications network is in a congestion state based on, for example, the above mentioned difference calculation result. Then, when deciding that the communications network is in a congestion state, the difference calculator/congestion detector 115 broadcasts a transmission restriction signal to the UE 200, thereby restricting the transmission processing of the UE 200. In this case, the condition for use in the evaluation of the congestion state need only to be that which expresses a normal completion ratio of the above connection sequence, and the condition is not limited to a difference between the number of received M1 signals and the number of transmitted M4 signals.

That is, the difference calculator/congestion detector 115 functions as an example of a monitor which monitors a ratio of the number of connection sequences started upon reception of the M1 signal (connection request signal) transmitted from the UE 200 to the number of connection sequences having been completed.
Further, the difference calculator/congestion detector 115 functions as an example of the evaluators which evaluate the presence or the absence of a congestion state in the communications network based on the thus obtained monitoring result.

Here, the threshold value table 121 stores therein more than one item of threshold value information [the first threshold value (Th1), the second threshold value (Th2), the third threshold value (Th3), and threshold value X] used in evaluation performed by the difference calculator/congestion detector 115. In this instance, Th1, Th2, Th3, and X are natural numbers, and Th1, Th2, and Th3 satisfy a relationship of Th3 ≤ Th1 < Th2.
The difference calculator/congestion detector 115 according to the present example decides that the communications network is in a congestion state in a case, for example, where the value obtained by subtracting the number of transmittedM4 signals from the number of received M1 signals is equal to or larger than the first threshold value (Th1). Then, the difference calculator/congestion detector 115 according to the present example broadcasts a signal (restriction instruction signal) to halt the new RACH connection sequences for a new part thereof toward each UE 200 through the control CH processing part 108.

That is, the difference calculator/congestion detector 115 and the control CH processing part 108 according to the present example functions as an example of a mobile terminal controller which restricts transmission of a new M1 signal by the UE 200 when it is evaluated that a congestion state occurs.
Further, the difference calculator/congestion detector 115 decides that the communications in the communications network is in a more serious congestion state in a case, for example, where the value obtained by subtracting the number of transmitted M4 signals from the number of received M1 signals is equal to or larger than the second threshold value (Th2) larger than the above mentioned Th1. Then, the difference calculator/congestion detector 115 broadcasts a signal (information relating to threshold value X) for restricting transmission of the M1 signal according to the number of times of retransmission toward each UE 200 by way of the control CH processing part 108. The UE 200 that has received this broadcasted signal restricts transmission of the M1 signal based on information relating to the number of times of retransmission of the M1 signal of the local station 200 and information relating to the above mentioned threshold X. With such processing, when the communications network is in a serious congestion state, transmission of the M1 signal is restricted (halted) with respect to the UE 200 with the number of times of retransmission of the M1 signal, which number is equal to or smaller than the threshold value X.

On the other hand, when the value obtained by subtracting the number of transmitted M4 signals from the number of received M1 signals is equal to or smaller than the third threshold value (Th3), it is decided that the congestion state in the communications network is resolved. Then, the eNB 100 broadcasts a signal (restriction lifting signal) for lifting the above mentioned restriction of the M1 signal toward each UE 200 by way of, for example, the control CH processing part 108. This makes it possible to lift the transmission restriction when the congestion state in the communications network is resolved.

The timer 120 resets the calculation results of the power calculator 112, the M1/M2 transceiving processing part 117, and the M3/M4 transceiving processing part 119 at a predetermined monitoring time interval set by a user (a network manager or the like). This makes it possible to evaluate the congestion state of the communications network by the unit of predetermined monitoring time duration, so that it becomes also possible to perform communication control suitable for the current state of the communications network.

Here, generally speaking, the time duration required from reception of an M1 signal by the eNB 100 to transmission of the corresponding M4 signal is approximately 24 msec through several hundreds msec, and its average is often approximately 100 msec. Thus, according to the present example, there provided is an example in which the monitoring time of the timer 120 is set to 80 msec. The value to be set as the monitoring time of the timer 120 is not limited to this value, and it is possible for a user or the like to appropriately change the value.

As described above, the eNB 100 according to the present example monitors a ratio of the number of connection sequences started upon reception of an M1 signal to the number of connection sequences having been completed (for example, a difference between the number of received M1 signals and the number of transmitted M4 signals), and evaluates the presence or the absence of a congestion state based on the thus obtained monitoring result.
This makes it possible for the eNB 100 to evaluate the congestion state of the communications network based on signals transceived in the connection sequence with RACH, so that early detection of the congestion state becomes available.

Further, when any congestion state is detected in the communications network, transmission processing of an M1 signal, which processing is performed by the UE 200, makes it possible to early restrict the occurring congestion.

### (2. 2) Example of Operation of eNB 100

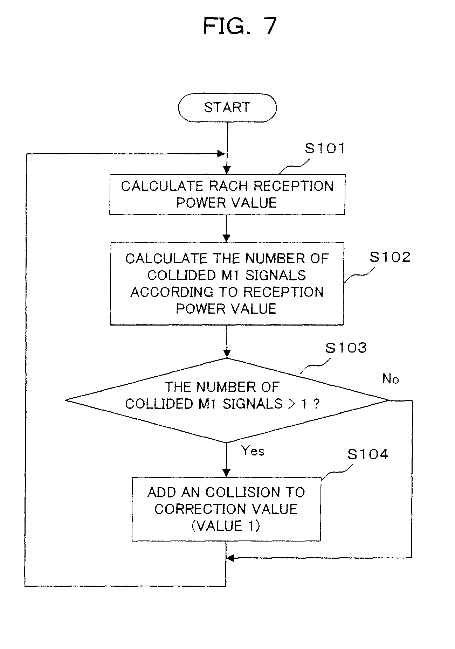

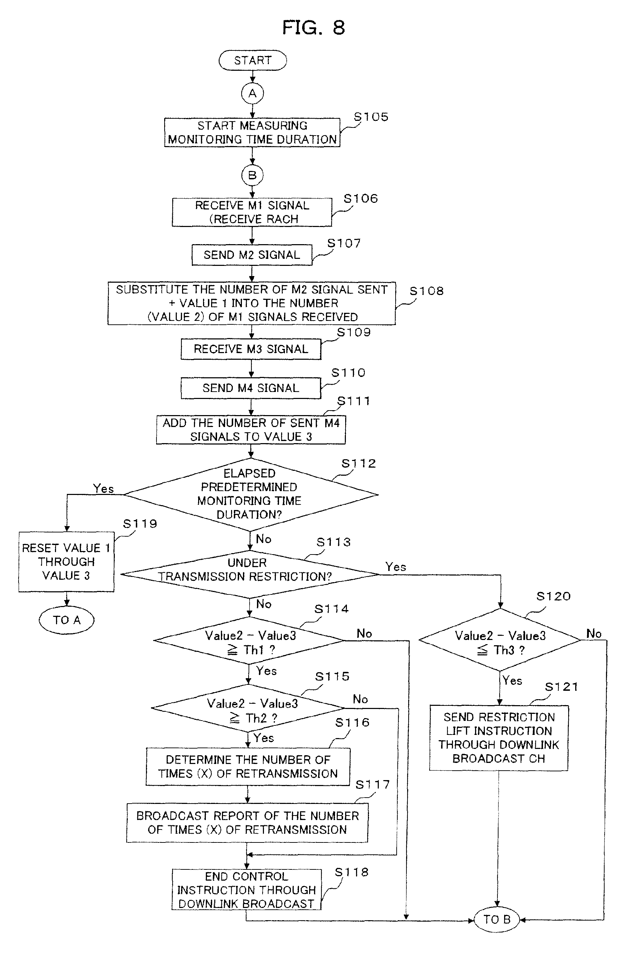

Next, a description will be made of an example of an operation (communications controlling method) of the eNB 100 with reference to FIG. 7 and FIG. 8.

First of all, as exemplified in FIG. 7, the power calculator 112 calculates reception power value at the time of receiving an RACH signal by the transceiver antenna 101 (step S101), and then calculates the number of M1 signals that have collided with one another from the thus calculated reception power value (step S102).
For example the power calculator 112 of the present example calculates approximately how many times larger is the reception power value at the transceiver antenna 101 than the already known reception power in a case where no collision occurs. On the basis of the calculation result, the number of received M1 signals collided with one another is capable of being calculated.

Then, the power calculator 112 evaluates whether or not the number of M1 signals which have collided with one another is larger than a value of "1" (step S103).
Here, when it is evaluated that the number of M1 signals which have collided with one another is larger than a value of 1 (Yes route of step S103), the number of M1 signals which have collided with one another is added to the Value 1 (step S104).
On the other hand, when it is evaluated that the number of M1 signals which have collided with one another is equal to or smaller than a value of 1 (No route of step S103), it is decided that no collision has occurred, and the Value 1 is not changed (updated).

The power calculator 112 according to the present example, for example, repeats the processing from the above steps S101 through S104, thereby collecting information relating to the number of M1 signals which have collided with one another. In this instance, the value of the above Value 1 can be reset by the timer 120 at each elapse of the predetermined monitoring time duration.
In this manner, the power calculator 112 calculates the number of received M1 signals that have collided with one another, which number is incapable of being calculated by the M1/M2 transceiving processing part 117, and corrects the number of received M1 signals calculated by the M1/M2 transceiving processing part 117.

On the other hand, the processing exemplified in FIG.
8 is performed on the M1 signal which is normally received.
First of all, the timer 120 starts measuring of the predetermined monitoring time (step S105), and the M1/M2 transceiving processing part 117 receives an M1 signal from the UE 200 through the transceiver antenna 101 (step S106).

Subsequently, the M1/M2 transceiving processing part 117 selects a temporary number (C-RNTI) from the intra-cell management number table 122, and then transmits an M2 signal including the received RACH number, the thus selected temporary number, and the transmission timing information, toward the UE 200 (step S107).
At that time, the M1/M2 transceiving processing part 117 substitutes the sum of the number of transmitted M2 signals and the Value 1 calculated by the power calculator 112, as the accurate number of received M1 signals, into the value 2 (step S108). This makes it possible for the eNB 100 to count the number of received M1 signals in consideration of the number of M1 signals which have collided with one another.

After that, the M3/M4 transceiving processing part 119 receives an M3 signal, including the temporary number and the terminal-unique ID, from the UE 200 (step S109).
The M3/M4 transceiving processing part 119 confirms if the UE 200 is a communications subject (whether or not the received terminal-unique ID is valid) based on the temporary number and the terminal-unique ID included in the M3 signal and the communications terminal management control table 123.

Then, when confirming that the UE 200 is a communicationssubject,theM3/M4transceiving processing part 119 transmits information indicating as such and an M4 signal, including information for use in call controlling or the like, to the UE 200 (step S110).
At that time, the M3/M4 transceiving processing part 119 adds the number of transmitted M4 signals to the Value 3 (step S111). This makes it possible to count the number of connection sequences which have been normally completed, out of the connection sequences started upon reception of an M1 signal.

Further, the eNB 100 evaluates whether or not the above predetermined monitoring time duration, which is set by the timer 120, has elapsed (step S112).
Here, when the timer 120 decided that the above mentioned monitoring time duration has elapsed (Yes route of step S112), the values of the Value 1 through the Value 3 are deleted (reset) (step S119), and the processing proceeds to the previous stage to the step S105 (see the reference character A in FIG. 8). This makes it possible to evaluate a congestion state in the communications network every when the predetermined monitoring time duration elapses, so that congestion state evaluation controlling suitable for the current state of the communications network becomes possible to be performed.

On the other hand, when it is decided that the above monitoring time duration has not yet elapsed (No route of step S112), the eNB 100 evaluates whether or not transmission restriction of an M1 signal has already been performed to the UE 200 (step S113).
Upon a decision made such that it is not in transmission restriction (No route of step S113), the difference calculator/congestion detector 115 evaluates whether or not the value (sequence completion ratio) obtained as a result of the calculation of the number of received M1 signals (Value 2) - the number of transmitted M4 signals (value 3) is equal to or larger than Th1 (step S114).

Subsequently, when the eNB 100 decides that the formula, Value 2 - Value 3 ≥ Th1, does not hold (No route of step S114), the processing proceeds to the stage previous to the step S106 (see the reference character B in FIG. 8), and monitoring of the completion ratio of the connection sequence is continued.
On the other hand, when deciding that the formula, Value 2 - Value 3 ≥ Th1, holds (Yes route of step S114), it is decided that the communications network is in a congestion state, and further, it is evaluated whether or not the value obtained as a result of the calculation, Value 2 - Value 3, is equal to or larger than Th2 which is larger than Th1 (step S115).

At that time, when the eNB 100 decides that the formula, Value 2 - Value 3 ≥ Th2, does not hold (No route of step S115), a restriction instruction signal is broadcasted toward each UE 200 with the downlink broadcasting CH for the purpose of halting new transmission processing of the M1 signal of the UE 200 (step S118).
This makes it possible for the eNB 100 to evaluate a congestion state in the communications network according to the completion ratio of an RACH connection processing, and also to restrict new connection processing performed by the UE 200, thereby suppressing the congestion state.

Subsequently, after broadcasting a restriction instruction toward each UE 200, the eNB 100 makes the processing proceed to the stage previous to the step S106 (see the reference character B in FIG. 8), and continues monitoring of the completion ratio of the connection sequence, and performs the above communications controlling.
Further, when deciding that the formula, Value 2 - Value 3 ≥ Th2 (Yes route of the step S115), holds, the eNB 100 decides that the communications network is in a serious congestion state, and restricts the transmission processing of the M1 signal also with respect to the UE 200 on which retransmission of the M1 signal is performed the X-number of times or less.

For this purpose, first of all, the difference calculator/congestion detector 115 determines the threshold value *X* according to the value obtained by the calculation, Value 2 - Value 3 (step S116), and then broadcasts information relating to the threshold value *X* toward each UE 200 by use of the downlink broadcast CH (step S117).
At that time, for example, if *X* is enlarged in a stepwise fashion as the value obtained by the calculation, Value 2 - Value 3, becomes larger, it is possible to relieve the UE 200 on which the number of times of retransmission performed is large, and it is also possible to restrict (halt) transmission processing performed by the UE 200 on which retransmission is performed the X-number of times or less. As a result, it becomes possible to efficiently suppress the occurrence of a congestion state according to the degree (the largeness of the value obtained by the calculation, Value 2 - Value 3) of the congestion state. In this instance, the term of "relieve" means "permit transmission of the UE 200 in which the number of times of retransmission is large".

Further, when the eNB 100 decides that it is in the above transmission restriction state (Yes route of the step S113), it is evaluated if the formula of Value 2 - Value 3 ≤ Th3 holds (step S120).
When deciding that the formula, Value 2 - Value 3 ≤ Th3, holds (Yes route of the step S120), the eNB 100 decides that the congestion state of the communications network is relieved. Then, the eNB 100 broadcasts a restriction lift signal to each UE 200 with the downlink broadcast CH (step S121).

In contrast to this, when deciding that the formula, Value 2 - Value 3 ≤ Th3, does not hold (No route of the step S120), the eNB 100 makes the processing proceed to the stage previous to the step S106 (see the reference character B in FIG. 8), and continues monitoring of the completion ratio of the connection sequence, and performs the above communications controlling.
In this manner, according to the present example, the eNB 100 monitors a ratio of the number of connection sequences started upon reception of the M1 signal transmitted from each UE 200 to the number of completed connection sequences calculated based on transmission of the M4 signal, and evaluates the presence or the absence of a congestion state based on this monitoring result.

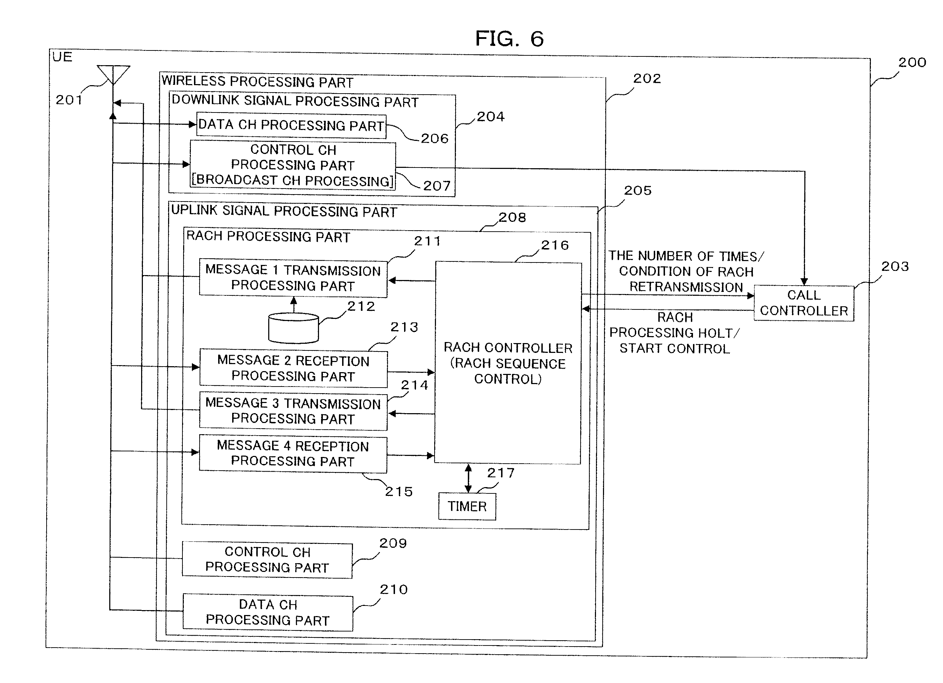

Then, upon detection of the congestion state in the communications network, the eNB 100 flexibly controls (restricts) transmission of the M1 signal of the UE 200.
Accordingly, it is possible to early detect an occurrence of a congestion state in the communications network, so that it becomes also possible to early and efficiently suppress the occurring of a congestion state.
(2. 3) UE 200
FIG. 6 is a block diagram illustrating an example of a construction of UE 200 according to one preferred embodiment. The UE 200 depicted in FIG. 6 includes: a transceiver antenna 201; a wireless processing part 202; and a call controller 203.

The downlink radio signal from the eNB 100 received by the reception function of the transceiver antenna 201 is subjected to predetermined wireless reception processing performed by the wireless processing part 202. On the other hand, the uplink wireless signal from the UE 200 is subjected to predetermined wireless transmission processing performed by the wireless processing part 202, and is then transmitted out toward the eNB 100 with the transmission function of the transceiver antenna 201. Further, the call controller 203 manages and controls call connection with the eNB 100, for example.

Here, the wireless processing part 202 include, for example, a downlink signal processing part 204 and an uplink signal processing part 205.
The downlink signal processing part 204, which performs predetermined wireless reception processing on a downlink signal, includes, for example, a data CH processing part 206 and a control CH processing part 207.
The data CH processing part 206 performs predetermined wireless reception processing on the data CH of a downlink signal; the control CH processing part 207 performs predetermined wireless reception processing on the control CH of a downlink signal. Further, the control CH processing part 207 according to the present example is also capable of performing reception processing to a broadcast CH signal from the eNB 100.

As described above, this broadcasting CH signal includes, for example, any one of the control instruction signal, the information relating to the threshold value X, and the restriction lift signal.
On the other hand, the uplink signal processing part 205, which performs predetermined wireless reception processing on an uplink signal, includes, for example: a RACH processing part 208; a control CH processing part 209; and a data CH processing part 210.

The control CH processing part 209 performs predetermined wireless transmission processing on the control CH of an uplink signal; the data CH processing part 210 performs predetermined wireless transmission processing on the data CH of an uplink signal.
The RACH processing part 208 performs predetermined wireless processing on RACH of the uplink signal.
From this reason, the RACH processing part 208 according to the present example includes, for example: a Message 1 transmission processing part 211; a RACH preamble code table 212; and a Message 2 reception processing part 213. Further, the RACH processing part 208 includes, for example: a Message 3 transmission processing part 214; a Message 4 reception processing part 215; a RACH controller 216; and a timer 217.

Here, the Message 1 transmission processing part (transmitter) 211 selects a single RACH number from the RACH preamble code table 212, and generates an M1 signal including the thus selected RACH number, and then transmits the thus generated M1 signal toward the eNB 100. The above selection is capable of employing a predetermined selection reference such as using random numbers.
The RACH preamble code table 212 stores therein more than one RACH number. According to the present example, for example, 64 kinds of RACH numbers are stored in the RACH preamble code table 212.

The Message 2 reception processing part 213 performs reception processing on the Message 2 according to the present example extracts, for example, the RACH number, the temporary number, the transmission timing information, and so on, from an M2 signal, and then notifies the RACH controller 216 of the thus extracted information items.
The Message 3 transmission processing part 214 generates an M3 signal and then transmits the thus generated M3 signal to the eNB 100. As already described, the M3 signal including the temporary number notified from the eNB 100 and the identification information (terminal-unique ID) unique to each UE 200.

The Message 4 reception processing part 215 performs reception processing on an M4 signal received from the eNB 100 through the transceiver antenna 201. In a case, for example, where the Message 4 reception processing part 215 confirms that the local station 200 is a communications subject, the Message 4 reception processing part 215 notifies the RACH controller 216 of as such. Further, information which is included in the M4 signal and is used in communications (call controlling or the like) performed thereafter is notified to the call controller 203 by way of the RACH controller 216.

The RACH controller 216 controls the above mentioned connection sequence with RACH on the UE 200.
Upon reception of notification of a call connection request, for example, the RACH controller 216 according to the present example controls the Message 1 transmission processing part 211 to generate and transmit an M1 signal and starts the connection sequence.

Further, the RACH controller 216 controls the Message 3 transmission processing part 214 to generate and transmit an M3 signal based on the contents (RACH number, temporary number, transmission timing information, and so on) of the M2 signal notified from the Message 2 reception processing part 213.
Further, in a case, for example, where the RACH controller 216 according to the present example confirms that the local station 200 is a communications subject due to an M4 signal, the RACH controller 216 notifies the call controller 203 of information for use in call controlling or the like.

The timer 217 measures the time elapsing from transmission of the M1 signal or the M3 signal to reception of the M2 signal or the M4 signal, and then notifies the RACH controller 216 of the measurement result. This makes it possible for the RACH controller 216 according to the present example to perform retransmission processing of the M1 signal or the M3 signal when the M2 signal or the M4 signal is not received even when a predetermined time duration elapses from transmission of the M1 signal or the M3 signal.

At that time, the RACH controller 216 counts the number of times of retransmission of the M1 signal or the M3 signal, and then notifies the call controller 203 of the thus obtained counting result. In this instance, the counting result can be reset upon reception of the M2 signal or the M4 signal as a trigger thereof.
As described above, in the UE 200 according to the present example, the call controller (controller) 203 controls the RACH controller 216 based on the contents of a broadcast CH signal from the eNB 100, thereby controlling the connection sequence with RACH.

For example, when receiving a restriction instruction signal for restricting new sequence processing, out of the connection sequence with RACH, from the eNB 100, the UE 200 is capable of controlling the Message 1 transmission processing part 211 to restrict (halt) new transmission of the M1 signal.
This makes it possible for the UE 200 to suppress an occurring congestion state, since the eNB 100 is capable of restricting the transmission processing of the M1 signal, when the eNB 100 decides that the communications network is in a congestion state.

Further, when the UE 200 receives information relating to the predetermined threshold value *X* from the eNB 100, for example, the UE 200 controls the Message 1 transmission processing part 211 to restrict (halt) transmission of the M1 signal which is transmitted the number of times equal to or smaller than the threshold value X.
Further, when receiving a signal (restriction lift signal) for lifting the above restriction from the eNB 100, for example, the UE 200 controls the Message 1 transmission processing part 211 to start (restart) transmission of the M1 signal, that is, the connection sequence with RACH.

### (2. 4) Example of Operation of UE 200

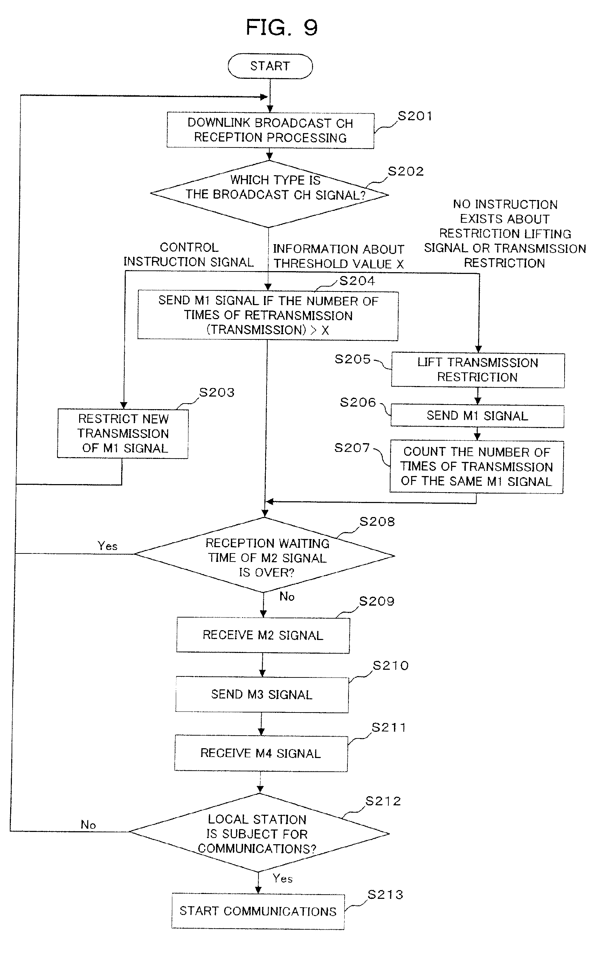

Next, referring to FIG. 9, a description will be made of an operation example of the UE 200.
First of all, as exemplified in FIG. 9, the control CH processing part 207 performs reception processing on the broadcast CH signal from the eNB 100 (step S201), and the call controller 203 recognizes the kind of broadcasting CH signal from the eNB 100 (step S202).

Here, for example, when the broadcast CH signal from the eNB 100 is a restriction instruction signal, the call controller 203 controls the RACH controller 216 and the Message 1 transmission processing part 211 to restrict (halt) new transmission of an M1 signal (step S203).
Further, when the broadcast CH signal is information relating to the threshold value *X*, the RACH controller 216 and the Message 1 transmission processing part 211 permit transmission of the M1 signal when the number of times of retransmission (transmission) of the M1 signal is larger than the threshold value *X* (step S204).

Further, when the broadcast CH signal from the eNB 100 is a restriction lift signal (or when no instruction about transmission restriction is present), the RACH controller 216 and the Message 1 transmission processing part 211 if the above transmission restriction (step S205) and start (restart) transmission of the M1 signal(step S206). At that time, the RACH controller 216 counts the number of times of transmission (the number of times of retransmission) of the M1 signal (step S207).

After that, the RACH controller 216 evaluates whether or not the M2 signal cannot be received from the eNB 100 within the predetermined time duration (reception wait time) set by the timer 217 (step S208).
When the RACH controller 216 decides that the M2 signal cannot be received within the reception wait time duration (Yes route of the step S208), the processing proceeds to step S201 to perform retransmission processing of the M1 signal.

On the other hand, when the RACH controller 216 decides that the M2 signal is successfully received within the reception wait time duration (No route of step S208), the Message 2 reception processing part 213 performs reception processing on the M2 signal (step S209).
Subsequently, the Message 3 transmission processing part 214 transmits the M3 signal toward the eNB 100 (step S210), and the Message 4 reception processing part 215 receives the M4 signal (step S211).

On the basis of a reception result of the M4 signal, the UE 200 confirms (evaluates) whether or not the local station 200 is a communications subject (step S212).
After that, when confirming that the local station 200 is a communications subject (Yes route of the step S212), the UE 200 starts communications with the eNB 100 (step S213), and then, the call controller 203 starts predetermined controlling of a connection call.

In contrast to this, when the UE 200 confirms that the local station 200 is not a communications subject (No route of the step S212), the processing proceeds to the step S201 to retransmit the M1 signal.
In this manner, the UE 200 according to the present example is capable of performing transmission controlling of the local station 200 in accordance with an instruction signal based on the completion ratio of the above connection sequence, which is broadcasted from the eNB 100.
The wireless communications system having the above described eNB 100 and UE 200 is capable of early detecting, for example, a congestion state in the communications network, which congestion state is caused by increase in the number of M1 signals, and also suppressing the congestion state of the thus caused communications network.

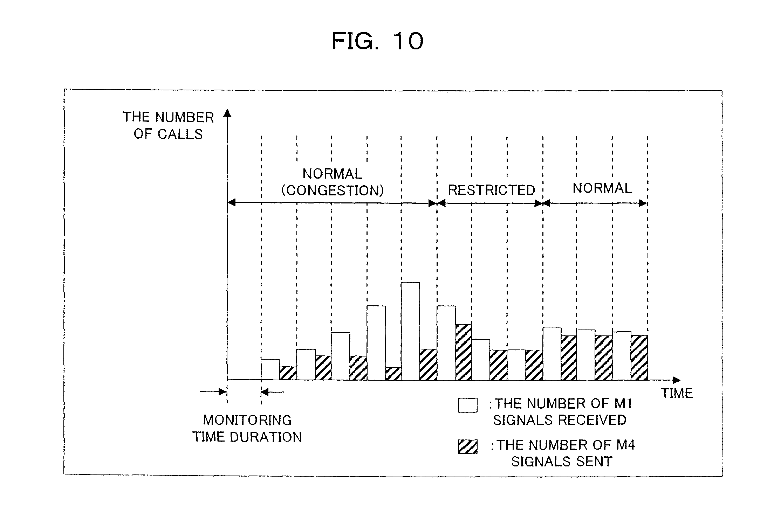

For example, the number of received M1 signals and the number of transmitted M4 signals, calculated at each predetermined monitoring time duration, change over time, as exemplified in FIG. 10. In this instance, in FIG. 10, the outline rectangles indicate the number of received M1 signals in the eNB 100, and the shaded rectangles indicate the number of transmitted M4 signals in the eNB 100.
As exemplified in FIG. 10, under the sate in which the UE 200 is not restricted in term of transmission of the M1 signal [a normal (congestion) state in FIG. 10], the number of received M1 signals can increase in comparison with the number of transmitted M4 signals. As a result, the communications network of the wireless communications system can fall in a congestion state.

Therefore, as already described above, when deciding that a difference between the number of received M1 signals and the number of transmitted M4 signals is equal to or larger than the threshold value Th1, the eNB 100 according to the present example decides that the communications network is in a congestion state, and restricts (halts) transmission of the M1 signals by the UE 200. In this instance, the transmission restriction here means at least restriction with respect to new transmission of an M1 signal. Here, additionally, as described above, restriction can be made with respect to transmission of the M1 signal which is retransmitted the number of times equal to or smaller than the threshold value X.

This reduces the number of M1 signals transmitted by the UE 200, and the number of received M1 signals on the eNB 100 and the number of transmitted M4 signals can be closed to each other (regulated state in FIG. 10), so that a congestion state in the communications network is suppressed.
After that, when the eNB 100 decides that a difference between the number of received M1 signals and the number of transmitted M4 signals is equal to or smaller than the threshold value Th3, it is decided that the congestion state in the communications network is resolved, and the restriction of the transmission process of UE 200 is lifted by the eNB 100, and the communications network being thereby retuned into a normal communications state (normal state in FIG. 10).

As described above, in the present example, the eNB 100 monitors the completion ratio of a connection sequence based on the number of received M1 signals (the number of started connection sequences) and also the number of transmittedM4 signals (the number of completed connection sequences), and then evaluates the presence and the absence of the congestion state based on this monitoring result. Then, the eNB 100 controls (performs restriction or lifting of the restriction) transmission in the UE 200 based on the monitoring result.
Accordingly, the communications controlling method according to the present example makes it possible to early detect generation of the congestion state in the communications network, and also to early suppress the occurring congestion state.

### [3] Others

In this instance, the constructions and the processes of the above described eNB 100 and UE 200 can be sift through in accordance with the necessity or appropriately combined with one another.
Further, transmission of an M1 signal by the UE 200 is controlled (restricted) in the above described example. Likewise, transmission of the M3 signal by the UE 200 can be controlled (restricted).

For example, on the basis of the number of received M3 signals and the number of transmitted M4 signals, the completion ratio of the connection sequence is monitored. The evaluation of the congestion state in the communications network can be evaluated based on this monitoring result. Further, the UE 200 can count the number of M3 signals retransmitted, and perform transmission control according to the number of times of the retransmission performed.
Further, in the above described example, a description was made of a case where the eNB 100 and the UE 200 perform the above described communications controlling, but it is also possible to execute the communications controlling by other construction elements (entities) of the wireless communications system. For example, the constructions and the processing of the eNB 100 and the UE 200, respectively, can be dispersedly arranged in the wireless communications system, and also can be arranged in a single device (for example, an eNB, UE, a wireless base station control device or the like).
All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment has been described in detail, it should be understood that the various changes, substitutions, and alterations could be made hereto without departing from the gist and scope of the invention.
In any of the above aspects, the various features may be implemented in hardware, or as software modules running on one or more processors. Features of one aspect may be applied to any of the other aspects.
The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A wireless base station (100) which is capable of communicating with a plurality of mobile terminals (200, 200-1, and 200-2), the wireless base station comprising:
a monitor (115) that monitors a ratio of the number of connection sequences which are started upon reception of connection request signals transmitted from the mobile terminals (200, 200-1, and 200-2) to the number of connection sequences which are completed; and
an evaluator (115) that evaluates the presence or the absence of a congestion condition based on the monitoring result obtained by the monitor (115).

2. The wireless base station according to claim 1, wherein the monitor (115) monitors by counting the number of connection request signals received from the mobile terminals (200, 200-1, and 202) and the number of connection permission signals transmitted toward the mobile terminal (200, 200-1, and 200-2).

3. The wireless base station according to claim 2, wherein the evaluator (115) decides that the congestion condition occurs when a difference between the number of connection request signals received from the mobile terminals (200, 200-1, and 202) and the number of connection permission signals transmitted toward the mobile terminals (200, 200-1, and 202) is equal to or greater than a first threshold value.

4. The wireless base station according to any of claims 1 to 3, further comprising:
a mobile terminal controller (108, 115) that restricts transmission of a new connection request signal from the mobile terminals (200, 200-1, and 200-2) when the evaluator (115) decides that the congestion condition occurs.

5. The wireless base station according to claim 3 or claim 4, wherein the mobile terminal controller (108, 115) restricts transmission of a new connection request signal from the mobile terminals (200, 200-1, and 200-2) in which the number of times of retransmission of the connection request signal is equal to or smaller than a predetermined threshold value when a difference between the number of connection request signals received from the mobile terminals (200, 200-1, and 202) and the number of connection permission signals transmitted toward the mobile terminals (200, 200-1, and 202) is equal to or greater than a second threshold value that is larger than the first threshold value.

6. The wireless base station according to claim 5, wherein the predetermined threshold value is determined according to a difference between the number of connection request signals received from the mobile terminals (200, 200-1, and 202) and the number of connection permission signals transmitted toward the mobile terminals (200, 200-1, and 202).

7. The wireless base station according to any of claims 3 to 6, wherein the mobile terminal controller (108, 115) lifts the restriction on the mobile terminals (200, 200-1, and 200-2) when a difference between the number of connection request signals received from the mobile terminals (200, 200-1, and 202) and the number of connection permission signals transmitted toward the mobile terminals (200, 200-1, and 202) is equal to or smaller than a third threshold value that is equal to or smaller than the first threshold value.

8. A mobile terminal (200, 200-1, and 200-2) which is capable of communicating with a wireless base station (100), the mobile terminal comprising:
a transmitter (211) that transmits a connection request signal toward the wireless base station (100); and
a controller (203) that restricts new transmission processing performed by the transmitter (211) according to information indicating restriction of the transmission, which information is received upon decision of an occurrence of a congestion condition by monitoring a ratio of the number of connection sequences which are started upon reception of a connection request signal transmitted from the mobile terminals (200, 200-1, and 200-2) to the number of connection sequences which are completed.

9. The mobile terminal according to claim 8,
wherein the controller (203) restricts transmission processing performed by the transmitter (211) according to information about the number of times of retransmission of the connection request signal, which information is received from the wireless base station (100).

10. The mobile terminal according to claim 8 or claim 9, wherein the controller (203) lifts the restriction based on information indicating the lifting of the restriction.

11. A communications controlling method for use in a wireless communications system, including: a plurality of mobile terminals (200, 200-1, and 200-2); a wireless base station (100) which is capable of communicating with the plurality of mobile terminals (200, 200-1, and 200-2), the communications controlling method comprising:
on the wireless base station (100),
monitoring a ratio of the number of connection sequences which are started upon reception of a connection request signal transmitted from the mobile terminals (200, 200-1, and 200-2) to the number of connection sequences which are completed; and
evaluating whether a congestion condition is present or absent, based on the monitoring result.

12. A wireless communications system, comprising:
a plurality of mobile terminals (200, 200-1, and 200-2);
a wireless base station (100) which is capable of communicating with the plurality of mobile terminals (200, 200-1, and 200-2);
a monitor (115) that monitors a ratio of the number of connection sequences which are started upon reception of a connection request signal from the mobile terminals (200, 200-1, and 200-2) to the number of connection sequences which are completed;
an evaluator (115) that evaluates whether a congestion condition is present or absent, based on the monitoring result obtained by the monitor (115);
a mobile terminal controller (108, 115) that restricts transmission of a new connection request signals from the mobile terminals (200, 200-1, and 200-2) when the evaluator (115) decides that the congestion condition occurs;
a transmitter (211) that transmits a connection request signal toward the wireless base station (100); and
a controller (203) that restricts new transmission processing performed by the transmitter (211) according to information indicating the restriction of the transmission, which information is received from the wireless base station (100).
